# EUROPÄISCHE PATENTANMELDUNG

(11) **EP 3 258 244 A2**
(43) Veröffentlichungstag der Anmeldung: **20.12.2017**
(21) Anmeldenummer: 17171115.3
(22) Anmeldetag: 15.05.2017
(51) Int. Cl.: G01N 21/57, G01N 21/88, G01N 21/89, G01N 21/84, G01N 21/86, G01N 21/896

(54) **INSPEKTIONSVORRICHTUNG UND INSPEKTIONSVERFAHREN ZUR INSPEKTION DES OBERFLÄCHENBILDES EINER EINEN PRÜFLING DARSTELLENDEN FLACHSACHE**

(30) Priorität: 27.05.2016 DE 102016109803
(71) Anmelder: Eyec GmbH, 20095 Hamburg (DE)
(72) Erfinder: Kaupp, Ansgar, 20095 Hamburg (DE); Lütjens, Dirk, 20095 Hamburg (DE); Springmann, Sören, 20095 Hamburg (DE)
(74) Vertreter: Reuther, Martin

(57) **Zusammenfassung**

Reflektierende bzw. geprägte Bereiche sollen für eine optische Inspektion über einen möglichst großen Winkelbereich möglichst einheitlich beleuchtet werden.

## Beschreibung

Die Erfindung betrifft eine Vorrichtung zur Inspektion des Oberflächenbildes einer einen Prüfling darstellenden Flachsache, wobei die Inspektionsvorrichtung einen von einer Anstrahllichtquelle angestrahlten passiven Belichtungskörper, der einen Prüfbereich ausleuchtet, bzw. wenigstens eine auf einen Prüfbereich gerichtete Direktlichtquelle sowie wenigstens einen auf den Prüfbereich gerichteten optischen Sensor umfasst. Auch betrifft die Erfindung ein Verfahren zur Inspektion des Oberflächenbildes einer einen Prüfling darstellenden Flachsache, wobei ein Prüfbereich über einen von einer Anstrahllichtquelle angestrahlten passiven Belichtungskörper indirekt ausgeleuchtet und von dem Prüfbereich ausgehendes Licht über wenigstens einen optischen Sensor erfasst wird.

Derartige Inspektionsvorrichtungen bzw. Inspektionsverfahren bzw. hierfür nutzbare Beleuchtungsvorrichtungen bzw. Beleuchtungsverfahren sind beispielsweise aus der DE 10 2008 022 292 A1, aus der DE 10 2006 017 912 A1, aus der DE 10 2006 008 259 A2, aus der DE 10 2006 009 593 A1, aus der DE 10 2005 031 647 A1, aus der JP 57-55144 B2, aus der JP 2005-188929 A, aus der WO 88/02970 A1, aus der US 4,801,810 oder aus der WO 2002/067567 A1 bekannt. Hierbei dienen mit Ausnahme der DE 10 2008 022 292 A1, welche der Untersuchung im Wesentlichen dreidimensionaler Strukturen dient, all diese Beleuchtungsvorrichtungen und Beleuchtungsverfahren der Inspektion von Flachsachen, insbesondere von Drucksachen, Platinen und ähnlichem.

Es ist Aufgabe der Erfindung, eine Inspektion reflektierender bzw. geprägter Bereiche auf Flachsachen zu ermöglichen.

Die Aufgabe der Erfindung wird durch eine Inspektionsvorrichtung und ein Inspektionsverfahren mit den Merkmalen der unabhängigen Ansprüche gelöst. Weitere, ggf. auch unabhängig hiervon, vorteilhafte Ausgestaltungen finden sich in den Unteransprüchen sowie der nachfolgenden Beschreibung.

Hierbei geht die Erfindung von der Grunderkenntnis aus, dass reflektierende bzw. geprägte Bereiche durch ein möglichst aus vielen Winkeln auf den Prüfling fallendes Licht inspiziert werden sollten.

So ermöglicht eine Inspektionsvorrichtung zur Inspektion des Oberflächenbildes einer einen Prüfling darstellenden Flachsache, welche einen von einer Anstrahllichtquelle angestrahlten passiven Belichtungskörper, der einen Prüfbereich ausleuchtet, sowie wenigstens einen auf den Prüfbereich gerichteten optischen Sensor umfasst, die Inspektion reflektierende bzw. geprägter Bereiche auf der Flachsache, wenn sich die Inspektionsvorrichtung dadurch auszeichnet, dass der Belichtungskörper optisch teildurchlässig ausgebildet und der optische Sensor in Bezug auf den Prüfbereich optisch jenseits des Belichtungskörpers, den Prüfbereich durch den Belichtungskörper hindurch erfassend angeordnet ist. Ebenso ermöglicht ein Inspektionsverfahren zur Inspektion des Oberflächenbildes einer einen Prüfling darstellenden Flachsache, wobei ein Prüfbereich über einen von einer Anstrahllichtquelle angestrahlten passiven Belichtungskörper indirekt ausgeleuchtet und von dem Prüfbereich ausgehendes Licht über wenigstens einen optischen Sensor erfasst wird, eine Inspektion reflektierender bzw. geprägter Bereiche auf der Flachsache, wenn sich das Inspektionsverfahren dadurch auszeichnet, dass der optische Sensor durch den Belichtungskörper hindurch den Prüfbereich erfasst. Sowohl die Inspektionsvorrichtung als auch das Inspektionsverfahren ermöglichen eine äußerst homogene Ausleuchtung des Prüflings insbesondere auch, in Abweichung zu dem Stand der Technik, aus der Richtung des Sensors, der an sich als der am meisten interessierende Bereich anzusehen ist. Auf diese Weise lässt sich auch die Grunderkenntnis umsetzen, dass Licht aus möglichst vielen Winkeln auf den Prüfling fallen sollte.

Insofern sei betont, dass der Strahlengang zwischen dem Prüfbereich und dem optischen Sensor durch den Belichtungskörper gestört wird, damit auch aus Richtung des Sensors eine Ausleuchtung durch den Belichtungskörper überhaupt gewährleistet werden kann. Diese durch die Teildurchlässigkeit des Belichtungskörpers bedingte Störung, die aufgrund der Teildurchlässigkeit einerseits es ermöglicht, dass der optische Sensor durch den Belichtungskörper hindurch den Prüfbereich sieht, und andererseits genau aus der Richtung des Sensors der Belichtungskörper Licht in Richtung des Prüfbereichs reflektiert bzw. streut, findet sich in dem Stand der Technik nicht, bei welchem in den dortigen Belichtungskörpern den Strahlengang zu dem jeweiligen Sensor freigebende Öffnungen vorgesehen sind, so dass der Sensor den Prüfbereich zwar störungsfrei erfassen, jedoch aus Richtung des Sensors gerade kein Licht in Richtung des Prüfbereichs bzw. Prüflings abgestrahlt werden kann. Während mithin die einfachen, den Strahlengang zu dem jeweiligen Sensor freigebende Öffnungen aus dem Stand der Technik ein einfach zusammenhängendes Gebiet im Strahlengang beschreiben, kann die Teildurchlässigkeit durch Öffnungen, die im mathematischen Sinne mehrere unzusammenhängende Gebiete im Strahlengang zwischen Prüfbereich und dem optischen Sensor darstellen, bereitgestellt werden, wobei dementsprechend der Belichtungskörper dann komplementär hierzu ein mehrfachzusammenhängendes Gebiet innerhalb des Strahlengangs darstellt.

Auch ermöglicht eine Inspektionsvorrichtung zur Inspektion des Oberflächenbildes einer einen Prüfling darstellenden Flachsache, welche einen von einer Anstrahllichtquelle angestrahlten passiven Belichtungskörper, der einen Prüfbereich ausleuchtet, sowie wenigstens einen auf den Prüfbereich gerichteten optischen Sensor umfasst, eine Inspektion reflektierender bzw. geprägter Bereiche der Flachsache, wenn sich die Inspektionsvorrichtung dadurch auszeichnet, dass die Anstrahllichtquelle auf den Belichtungskörper gerichtet ist und sich der Belichtungskörper durchgängig über wenigstens 120° erstreckt. Ebenso ermöglicht ein Inspektionsverfahren zur Inspektion des Oberflächenbildes einer einen Prüfling darstellenden Flachsache, wobei ein Prüfbereich über einen von einer Anstrahllichtquelle angestrahlten passiven Belichtungskörper indirekt ausgeleuchtet und von dem Prüfbereich ausgehendes Licht über wenigstens einen optischen Sensor erfasst wird, eine Inspektion reflektierender bzw. geprägter Bereiche auf Flachsachen, wenn sich das Inspektionsverfahren dadurch auszeichnet, dass der Prüfbereich über zumindest 120° durchgängig ausgeleuchtet wird. Hierbei ermöglicht insbesondere die Durchgängigkeit der Erstreckung des Belichtungskörpers bzw. die Durchgängigkeit der Ausleuchtung eine möglichst gleichförmige Belichtung des Prüfbereichs und eines dort befindlichen Prüflings, was wiederum die entsprechende Grunderkenntnis umsetzt, dass aus möglichst vielen Winkeln auf den Prüfling fallendes Licht genutzt werden sollte.

Vorzugsweise erfolgt die durchgängige Ausleuchtung nicht nur über zumindest 120°, sondern über zumindest 130° bzw. sogar über zumindest 135°, was überraschender Weise zu wesentlich besseren Ergebnissen führt.

Die vorstehenden und auch die nachstehend aufgeführten Winkelangaben gelten in einer senkrecht zur Oberfläche der zu prüfenden bzw. zu inspizierenden Flachsachen stehenden Schnittebene. Je nach konkreten Erfordernissen kann diese Schnittebene insbesondere den optischen Sensor und dessen Strahlengang aufweisenden bzw. beinhalten. Auch ist es denkbar, die Schnittebene parallel zu einer Maschinenrichtung der Inspektionsvorrichtung bzw. senkrecht zu einer Längserstreckungsrichtung der Inspektionsvorrichtung, wie sie nachfolgend noch näher erläutert werden, zu legen, um auf diese Weise den entsprechenden Symmetrien, wie sie in der Inspektionsvorrichtung zu finden sind, Rechnung tragen zu können.

Durch die Gleichförmigkeit des aufgrund der vorstehend erläuterten Inspektionsverfahren bzw. Inspektionsvorrichtungen auf den Prüfling gerichteten Lichts gelingt es einerseits übermäßig hohe Helligkeitsspitzen, die durch eine unmittelbare Reflektion von Licht in den optischen Sensor hinein bedingt sein könnten, zu vermeiden bzw. auf ein Minimum zu reduzieren, sodass das entsprechende Erscheinungsbild trotz des Vorhandenseins etwaiger Glanzbereiche überprüft werden kann. Ebenso bedingt die entsprechend gleichförmige Beleuchtung, dass etwaige Strukturen, wie sie insbesondere durch prägende Verfahren bereitgestellt werden, auf Grund der gleichmäßigen Beleuchtung in ihren für die Inspektion störenden Eigenschaften minimiert werden. Die möglichst allseitige Beleuchtung lässt beispielsweise reflektierende Kugeln im Prüfbereich flach erscheinen, wenn die Beleuchtung ausreichend gleichmäßig und die Fokussierung des optischen Sensors entsprechend gewählt ist, sodass eine Inspektion der entsprechenden Oberflächen vorgenommen werden kann.

Es versteht sich, dass eine möglichst gleichmäßige Ausleuchtung letztlich vorzugsweise von allen Seiten stattfinden sollte, sodass die entsprechende Inspektionsvorrichtung vorzugsweise um den Prüfbereich rotationssymmetrisch ausgebildet sein kann, wobei die entsprechende Rotationsachse dann aus Symmetriegründen vorzugsweise senkrecht auf dem Prüfbereich steht. Da jedoch der Prüfbereich unter Berücksichtigung gängiger Kamerasysteme und unter Berücksichtigung realisierbarer Größen für Beleuchtung bzw. für gängige Lichtquellen und beherrschbarer Belichtungskörper eine Größenordnung von ungefähr 1 mm, insbesondere einen Größenbereich zwischen 2,5 mm und 0,5 mm betragen kann, wäre eine entsprechende Prüfung industriell gefertigter Flachsachen, wie beispielsweise von Drucksachen, die auf gängigen Druckmaschinen gedruckt, geprägt oder sonst wie gefertigt wurden, äußerst aufwendig. Aus diesem Grunde ist es an sich von Vorteil, wenn die entsprechenden Inspektionsvorrichtungen sich längs erstreckend ausgebildet sind und von einem Prüfling entlang einer Maschinenrichtung durchlaufen werden, wobei die Längserstreckungsrichtung vorzugsweise senkrecht zur Maschinenrichtung und senkrecht zur Oberfläche der zu prüfenden bzw. zu inspizierenden Flachsachen gewählt ist und auch Querrichtung genannt wird. Eine derartige Anordnung ermöglicht, dass verhältnismäßig breitere Flachsachen in industriellem Maßstab schnell und betriebssicher einer Inspektion unterzogen werden können, wobei sich herausgestellt hat, dass eine Beleuchtung in einer Ebene aus möglichst vielen Winkeln bereits zu einer ausreichend guten Vergleichmäßigung des auf diese Weise ausgeleuchteten Prüfbereichs auch bei dem Vorhandensein reflektierender bzw. geprägter Bereiche auf den jeweiligen Flachsachen führt, um eine Inspektion zu ermöglichen.

Insbesondere kann die Inspektionsvorrichtung derart ausgebildet sein, dass sie eine über zumindest 120°, insbesondere über zumindest 130° bzw. sogar über zumindest 135°, durchgängige Beleuchtung des Prüfbereichs gewährleistet, was dementsprechend zu einem gleichmäßigen Erscheinungsbild führt.

Der Belichtungskörper kann beispielsweise ein halbdurchlässiger Spiegel sein bzw. einen derartigen Spiegel umfassen, wodurch eine Teildurchlässigkeit ohne weiteres realisiert sein kann. Kumulativ bzw. alternativ hierzu kann ein lichtdurchlässiger Streu- oder Spiegelkörper als teildurchlässig ausgebildeter Belichtungskörper genutzt werden, wobei die Lichtdurchlässigkeit beispielsweise durch Löcher oder Schlitze oder durch Öffnungen bzw. sonstige Maßnahmen gewährleistet werden kann. Insbesondere Spiegelkörper scheinen wegen ihrer hohen Intensität in der Reflektion, die ungefähr eine Größenordnung über dem Reflektions- bzw. Rückstreugrad von Streukörpern liegt, besonders geeignet, um möglichst viel Licht über den teildurchlässig ausgebildeten Belichtungskörper auf den Prüfbereich zu richten.

Bei geeigneter Fokussierung des optischen Sensors und bei ausreichender Dichte der Öffnungen, wie Schlitze oder Löcher, in den Streu- oder Spiegelkörpern beeinflussen die neben den Öffnungen verbleibenden streuenden oder spiegelnden Bereiche der Streu- oder Spiegelkörper das Kamerabild bzw. ein von dem optischen Sensor erfasstes Bild nur unwesentlich, sodass die entsprechenden Nachteile ohne weiteres in Kauf genommen werden können, da dieses durch die Gleichförmigkeit der resultierenden Belichtung mehr als aufgewogen wird.

So kann beispielsweise der optische Sensor verhältnismäßig dicht an den Belichtungskörper heran gesetzt werden, so dass der Belichtungskörper selbst derart weit aus dem Fokus ist, dass seine den Strahlengang zu dem Sensor störenden, strukturbedingten Einflüsse das von dem Sensor aus dem Prüfbereich erfasste Bild nicht wesentlich bzw. nur im Sinne einer Gesamtdämpfung beeinträchtigen.

Spiegelkörper mit entsprechenden Öffnungen scheinen insbesondere auch halbdurchlässigen Spiegeln mit deren Verlusten überlegen, wobei selbstverständlich auch Kombinationen hiervon genutzt werden können.

Häufig wird die Strahlungsintensität der Anstrahllichtquelle über den abgestrahlten Raumwinkel variieren. Ebenso führen unterschiedliche Abstände des Belichtungskörpers zum Prüfbereich sowie variierende Winkel der Oberfläche des Belichtungskörpers zum Prüfbereich zu Variationen der Lichtstärke, die auf den Prüfbereich gestrahlt wird. Um diesen Nachteil zu begegnen, kann der Spiegelungsgrad des halbdurchlässigen Spiegels bzw. die Lichtdurchlässigkeit und/oder Rückstrahlung des Streu- oder Spiegelkörpers über die Erstreckung des Belichtungskörpers variieren, sodass die aus verschiedenen Winkeln auf den Prüfbereich fallende Lichtstärke möglichst homogen bzw. gleichförmig ist. Hierbei kann die Variation der Lichtdurchlässigkeit bzw. die Rückstrahlung des Streu- oder Spiegelkörpers insbesondere durch die Dichte, die Größe und/oder die Form von Öffnungen bzw. der Löcher auf konstruktiv einfache Weise beeinflusst werden.

In konkreter Umsetzung sowohl der Inspektionsvorrichtung als auch des Inspektionsverfahrens ist es von Vorteil, wenn der Prüfbereich mit multidirektionalem Licht bzw. mit von dem Belichtungskörper stammenden Licht mit einer über 120°, insbesondere über zumindest 130° bzw. sogar über zumindest 135°, unter 20%, insbesondere unter 15%, variierenden Lichtstärke ausgeleuchtet wird.

Vorzugsweise ist die Anstrahllichtquelle auf den Belichtungskörper gerichtet, sodass komplexere Strahlengänge vermieden werden können. Ggf. kann jedoch ein Teil des von der Anstrahllichtquelle ausgehenden Lichts auch direkt auf den Prüfbereich gestrahlt werden.

Auch ist es von Vorteil, wenn die Anstrahllichtquelle in ihrem Strahlwinkel auf die Erstreckung des Belichtungskörpers beschränkt ist, wodurch -je nach konkreter Umsetzung bzw. Wahl der Anstrahllichtquelle - Strahlungsverluste minimiert bzw. die Gefahr von etwaigem Fremdlicht auf ein Minimum reduziert werden können.

In konkreter Umsetzung kann, wenn ein Helligkeitswert innerhalb eines definierten Helligkeitswertebereichs von dem optischen Sensor erfasst wird, auf einen Glanzbereich in dem Prüfbereich bzw. in dem im Prüfbereich befindlichen Oberflächenbild des Prüflings geschlossen werden. Vorzugsweise wird der Helligkeitswertebereich zuvor anhand des erwarteten Oberflächenbilds der zu prüfenden Flachsachen festgelegt, da nicht zwingend in einem Glanzbereich die Höchsthelligkeitswerte, welche von der Kamera erfasst werden, zu finden sein müssen. Die Gleichförmigkeit der Beleuchtung führt gerade bei reflektierenden Bereichen dazu, dass diese nicht übermäßig übersteuert von dem optischen Sensor erfasst werden können. Durch geeignete Wahl des Helligkeitswertebereichs im Vergleich zu Helligkeitswerten des übrigen Oberflächenbilds der zu inspizierenden Flachsachen ggf. unter Berücksichtigung weiterer Eigenschaften des von dem optischen Sensor erfassten Lichts, wie beispielsweise dessen Wellenlänge oder dessen Polarität, kann jedoch ein Glanzbereich von anderen Bereichen des Oberflächenbilds eines Prüfling unterscheidbar definiert werden.

Vorzugsweise wird der Prüfbereich mit multidirektionalem Licht, insbesondere mit einer über 120°, insbesondere über zumindest 130° bzw. sogar über zumindest 135°, unter 20%, insbesondere unter 15%, variierenden Lichtstärke, ausgeleuchtet, was gerade ein Übersteuern hinsichtlich der Helligkeitswerte, welche von dem optischen Sensor gemessen werden, auf ein Minimum reduziert. Dieses bedingt dann auch eine entsprechend homogene Ausleuchtung des Prüfbereichs.

Dementsprechend ist es von Vorteil, wenn der Belichtungskörper entsprechend homogen ausgebildet ist und Variationen des Spiegelungsgrads bzw. der Lichtdurchlässigkeit so gering wie möglich gewählt und ggf. lediglich an die Inhomogenitäten der Anstrahllichtquelle bzw. der Anstrahllichtquellen angepasst sind. Auch erscheinen Schwankungen in dem Spiegelungsgrad bzw. der Lichtdurchlässigkeit unter 20 %, insbesondere unter 15 % bei über 120°, insbesondere über zumindest 130° bzw. sogar über zumindest 135°, für vorteilhaft. Wobei in Abhängigkeit von einer Löcherdichte oder Öffnungsdichte über mehrere Öffnungen bzw. Löcher hinweg Mittelwerte gebildet werden sollten. Insbesondere versteht es sich, dass die vorstehend erwähnten Homogenitäten auch im Bereich des Strahlengangs vom Prüfbereich zu dem Sensor oder auch im Bereich von sonstigen Strahlengängen durch den Belichtungskörper hindurch beibehalten werden sollten, um auch im Bereich dieser Strahlengänge eine gleichmäßige Ausleuchtung des Prüfbereichs mit dem von dem Belichtungskörper bzw. von den den Belichtungskörper anstrahlenden Anstrahllichtquellen ausgehendem Licht zu gewährleisten.

Vorzugsweise erstreckt sich der Belichtungskörper zumindest in einem Bereich mit einem elliptischen Querschnitt, wobei ein Fokus des elliptischen Querschnitts in dem Prüfbereich und der andere Fokus des elliptischen Querschnitts in der Anstrahllichtquelle liegen. Dieses ermöglicht auf baulich einfache Weise eine möglichst gleichförmige Ausleuchtung des Prüfbereichs.

Insbesondere kann eine möglichst gleichförmige Ausleuchtung gewährleistet werden, wenn die Inspektionsvorrichtung zumindest zwei Anstrahllichtquellen aufweist und sich der Belichtungskörper zumindest in zwei Bereichen mit jeweils einem elliptischen Querschnitt erstreckt, wobei jeweils ein Fokus jedes der beiden elliptischen Querschnitte in dem Prüfbereich und der jeweils andere Fokus jedes der elliptischen Querschnitte in einer der beiden Anstrahllichtquellen liegen.

Insbesondere können die beiden in dem Prüfbereich liegenden Fokusse in einem gemeinsamen Punkt oder, bei einer linearen Ausgestaltung der Inspektionsvorrichtung, auf einer Linie liegen.

Hierbei ist es denkbar, dass die Kamera genau in der Symmetrieebene bzw. Symmetrieachse zwischen den elliptischen Querschnitten angeordnet ist. Ebenso kann hier eine Abweichung gewählt werden, wenn dieses konstruktiv sinnvoll erscheint, ohne dass die Funktionsweise der Inspektionsvorrichtung bzw. der Verfahrensablauf bei dem Inspektionsverfahren nachhaltig beeinträchtigt werden. Vorzugsweise beträgt die Abweichung weniger als 45° insbesondere weniger als 30°.

Insbesondere durch die bereits erwähnte Variation des Spiegelungsgrads bzw. der Lichtdurchlässigkeit oder der Rückstrahlung über die Erstreckung des Belichtungskörpers können insbesondere auch etwaige Übergangsbereiche, die zwischen den beiden elliptischen Querschnitten zu finden sind, hinsichtlich ihrer optischen Eigenschaften an die optischen Eigenschaften des übrigen Belichtungskörpers angepasst werden.

Je nach konkreter Umsetzung kann eine Fertigung eines Belichtungskörpers mit elliptischem Querschnitt sich als verhältnismäßig komplex erweisen, was insbesondere für Kleinserien gilt, da entsprechende Spiegel bzw. entsprechende Streu- oder Spiegelkörper konstruktiv nur sehr schwer zuverlässig elliptisch ausgeformt werden können. Dementsprechend ist es vorteilhaft, wenn der Belichtungskörper von einem entsprechenden Träger getragen wird, der dem Belichtungskörper seine elliptische Form verleiht. Es erweist sich als konstruktiv wesentlich einfacher darstellbar, wenn ein rein mechanisches Bauteil in eine bestimmte Form gebracht werden muss und dann dieses mechanische Bauteil, nämlich der Träger, dem Belichtungskörper seine endgültige Form verleiht. Je nach konkreter Ausgestaltung des Belichtungskörpers, beispielsweise wenn dieser eine Folie oder ein dünnes Blech umfasst, muss der Träger nicht durchgängig mit dem Belichtungskörper in Kontakt stehen, da die Eigensteifigkeit des Belichtungskörpers zumindest über kurze Distanzen zu einer ausreichend genauen Endform des Belichtungskörpers beiträgt.

Beispielsweise kann der Belichtungskörper mit dem Träger verspannt werden, sodass auch die entsprechenden Spannkräfte zu einer Formgebung des Belichtungskörpers beitragen.

Es versteht sich, dass der Träger insbesondere Aussparungen oder Unterbrechungen aufweisen kann, wo benötigte Baugruppen, wie beispielsweise Leuchten oder andere Lichtquellen und/oder der optische Sensor angeordnet werden sollen bzw. einen freien Strahlengang durch den Belichtungskörper hindurch benötigen.

Wie bereits vorstehend dargelegt, bedingt die verhältnismäßig gleichmäßige Ausleuchtung des Prüfbereichs durch den Belichtungskörper, dass etwaige Oberflächenstrukturen nicht mehr bzw. nur sehr schwer oder kaum erfasst werden können. Dieses bedeutet im Umkehrschluss, dass hierdurch zwar das Oberflächenbild geprägter Bereiche oder auch von Glanzbereichen inspiziert werden kann, dass jedoch bestimmte andere Prüfungen nur zu unzureichenden bzw. mangelhaften Ergebnissen führen, die jedoch, um letztlich eine Inspektion zu ermöglichen, zunächst einmal in Kauf genommen werden müssen. Insofern erweist sich mit den vorstehend erläuterten Inspektionsverfahren und -vorrichtungen eine Inspektion auf Kanten, also auf die durch ein Prägen bedingten Strukturen bzw. eine Inspektion auf Oberflächendefekte, wie Riefen oder Kratzer, als äußerst schwierig.

So kann durch eine Inspektionsvorrichtung zur Inspektion des Oberflächenbildes einer einen Prüfling darstellenden Flachsache, welche wenigstens eine auf einen Prüfbereich gerichtete Direktlichtquelle sowie wenigstens einen auf dem Prüfbereich gerichteten optischen Sensor umfasst, eine Inspektion reflektierender bzw. geprägter Bereiche auf Flachsachen ermöglicht werden, wenn die Direktlichtquelle über einen mit einer Komponente parallel zu einer Maschinenrichtung, entlang welcher der Prüfling die Inspektionsvorrichtung durchläuft, und senkrecht zur Oberfläche der zu prüfenden bzw. zu inspizierenden Flachsachen ausgerichteten Seitenspiegel auf den Prüfbereich gerichtet ist. Über den Seitenspiegel wird somit auch das Direktlicht aus möglichst vielen Winkeln auf den Prüfling bzw. auf den Prüfbereich gerichtet.

Hierbei können verschiedenen Mechanismen genutzt werden, um mittels der Direktlichtquelle Kanten, Kratzer oder Riefen erkennen zu können. So kann beispielsweise im Direktlicht im Hellfeld versucht werden, die durch die Kanten oder Riefen bzw. Kratzer bedingten Verdunkelungen zu erkennen, was jedoch angesichts der Nebenaufgabe, auch reflektierende Bereiche zu prüfen und der hierdurch bedingten Übersteuerung in der Regel zu wenig befriedigenden Ergebnissen führen wird. Als wesentlich praktikabler haben sich Dunkelfeldmessungen, bei denen das Direktlicht bzw. die Direktlichtquelle zwar auf dem Prüfbereich gerichtet jedoch dessen Reflektion vom Prüfbereich unmittelbar neben den optischen Sensor ausgerichtet ist, sowie Schräglichtmessungen erwiesen, welche beide darauf ausgerichtet sind, dass aus den Direktlichtquellen stammendes Licht an Kanten, Kratzer oder Riefen in einem ubiquitären Reflektionskegel abgestrahlt wird, sodass dann bei geeigneter Ausrichtung der Direktlichtquelle in Bezug auf den jeweils zu ermittelnden Kratzer bzw. in Bezug auf die jeweils zu ermittelnden Kante oder Riefe ein entsprechender Lichtblitz in der Kamera bedingt wird. Der Seitenspiegel ermöglicht hierbei, Direktlichtquellen aus sehr unterschiedlichen Winkeln auf den Prüfbereich zu richten, sodass eine möglichst große Bandbreite an Kanten, Kratzern oder Riefen in verschiedenen Richtungen und an verschiedenen Orten im Prüfbereich ermittelbar ist. Hierbei sind insbesondere Kratzer oder Riefen parallel zur Maschinenrichtung von Interesse, da entsprechend Fehler auf Grund der maschinellen Eigenschaft, dass die Flachsache die Maschine parallel zur Maschinenrichtung durchläuft, besonders häufig zu erwarten sind.

Vorzugsweise ist die Direktlichtquelle, ggf. über die Seitenspiegel, derart auf dem Prüfbereich gerichtet, dass Licht dicht neben den optischen Sensor reflektiert wird. Dieses führt dann, wie bereits vorstehend erwähnt, zu einem Lichtblitz in dem optischen Sensor, wenn eine entsprechende Kante oder Riefe bzw. ein entsprechender Kratzer den von der Direktlichtquelle auf dem Prüfbereich ausgeleuchteten Bereich durchläuft.

Um einen möglichst intensiven Lichtblitz und insbesondere auch möglichst flache Kanten, Riefen oder Kratzer erkennen zu können, ist es von Vorteil, die Direktlichtquelle mit einem möglichst kleinen Leuchtkegel zu versehen, wobei es letztlich eine Frage einer Kosten-Nutzen-Relation ist, wie viele Direktlichtquellen zur Anwendung kommen, um dann den gesamten Prüfbereich in ausreichendem Maße mit entsprechendem Direktlicht auszuleuchten. Insofern ist es an sich von Vorteil, wenn möglichst viele Direktlichtquellen zur Anwendung kommen, solange die räumlichen Verhältnisse und die Stabilität der Gesamtanordnung dieses ermöglichen.

Insbesondere hinsichtlich der räumlichen Verhältnisse sind jedoch Grenzen gesetzt, sodass die Direktlichtquellen vorzugsweise sämtlich über dem Prüfbereich angeordnet sind. Über den Seitenspiegeln können virtuell auch Direktlichtquellen seitlich des Prüfbereichs angeordnet sein, wobei es sich versteht, dass Direktlichtquellen durchaus über eine Breite, die 10% der Breite des Prüfbereichs überschreitet, an der Inspektionsvorrichtung vorgesehen sein können, und diese dennoch als ausreichend über dem Prüfbereich angeordnet angesehen werden.

Vorzugsweise sind der bzw. die Seitenspiegel plan ausgebildet, damit die optischen Verhältnisse zwischen den Direktlichtquellen und dem Prüfbereich nicht zu komplex werden und somit verhältnismäßig einfach als virtuelle seitliche Direktlichtquellen wirkende Direktlichtquellen, die über dem Prüfbereich bzw. über dem zum Durchlaufen der Prüflinge vorgesehenen Raum angeordnet sind, dargestellt werden können. Dieses gilt insbesondere, wenn eine Vielzahl an Direktlichtquellen als seitliche Direktlichtquellen über den Seitenspiegel abgebildet werden sollen.

An sich ist davon auszugehen, dass die Kombination der Anstrahllichtquelle mit ihrem passiven Belichtungskörper und der Direktlichtquelle zu Überschneidungen in den Beleuchtungen führen, welche jeweils die Messergebnisse beeinträchtigen. Insofern kann es von Vorteil sein, entsprechende Messungen hintereinander bzw. sukzessive in getrennten Vorrichtungen durchzuführen, was jedoch konstruktiv verhältnismäßig aufwändig ist.

Senden jedoch die Direktlichtquellen und die Anstrahllichtquellen separierbares Licht aus, was beispielsweise durch eine unterschiedliche Polarität, Wellenlänge oder Taktung umgesetzt werden kann, so lassen sich die Messungen auch in einer gemeinsamen Inspektionsvorrichtung durchführen.

So ist es denkbar, dass beispielsweise Licht einer bestimmten Farbe für die Direktlichtquellen bzw. für die Direktlichtquelle genutzt wird, wobei hier insbesondere auch Infrarot bzw. ultraviolettes Licht genutzt werden kann, da Kanten, Kratzer oder Riefen letztlich mechanische Strukturen sind, die auch im infraroten Bereich bzw. im ultravioletten Bereich erkennbar sind, sodass der gesamte sichtbare Bereich für die Anstrahllichtquelle, welche letztlich in der Regel das optische Erscheinungsbild prüfen soll, genutzt werden kann.

Insbesondere kann das Licht sowohl der Direktlichtquelle als auch der Anstrahllichtquelle über einen gemeinsamen optischen Sensor erfasst werden, was letztlich eine Auswertung und insbesondere auch den Aufbau der Inspektionsvorrichtung erleichtert. Es versteht sich, dass alternativ ohne weiteres auch mehrere optische Sensoren, die insbesondere verschieden voneinander ausgebildet und ggf. für das separierbare Licht der Direktlichtquelle und der Anstrahllichtquelle geeignet optimiert sein können, dementsprechend genutzt werden können, wobei es sich versteht, dass auch mehrere optischen Sensoren beispielsweise lediglich zur Erfassung des Lichts der Anstrahllichtquelle genutzt werden können, wenn dieses als geeignet erscheint.

Insofern kann mittels der Anstrahllichtquelle ein erster Messkanal gebildet werden, während mittels der Direktlichtquelle ein zweiter Messkanal gebildet werden kann.

Vorzugsweise erfolgt über den zweiten Messkanal eine Kanten- bzw. Kratzerdetektion im Hell- oder Dunkelfeld, wobei zwischen dem ersten Messkanal und dem zweiten Messkanal ein Helligkeitsverhältnis ermittelt werden kann. Wenn das Helligkeitsverhältnis innerhalb eines definierten Helligkeitsverhältnisbereichs liegt, kann auf einem Glanzbereich in dem Prüfbereich bzw. in dem im Prüfbereich befindlichen Oberflächenbild des Prüflings geschlossen werden.

Dieses nutzt aus, das bei direkter Beleuchtung ein kratzer- oder kantenfreier Glanzbereich im Kamerabild dunkler erscheint als ein vergleichsweise heller nicht glänzender Bereich, da letzterer in alle Richtungen streut. Auf diese Weise lassen sich insbesondere in Kombination mit dem Helligkeitswerts des ersten Messkanals bzw. mit dem durch die Anstrahllichtquelle bedingten Helligkeitswert auch Glanzbereiche von Bereichen, die zufällig im indirekt beleuchteten Bild gleichhell erscheinen jedoch nicht glänzend sind, verhältnismäßig betriebssicher unterscheiden.

Wie bereit vorstehend erläutert, ist es von Vorteil, wenn die Inspektionsvorrichtung senkrecht zu einer Maschinenrichtung im Wesentlichen gleichbleibend bzw. gleichförmig ausgebildet ist. Dementsprechend ist es von Vorteil, wenn der Belichtungskörper sowie die Anstrahllichtquelle sich in einer Querrichtung, die quer zur Maschinenrichtung ausgebildet ist, mit gleichbleibendem Querschnitt erstrecken. Selbiges gilt auch für den optischen Sensor, insoweit dessen Erstreckung über eine große Breite in Querrichtung benötigt wird. Bei geeignetem optischen Aufbau kann der optische Sensor in Querrichtung wesentlich schmaler als die restliche Inspektionsvorrichtung und insbesondere als der Belichtungskörper bzw. die Anordnung der Anstrahllichtquelle gewählt werden. Gleichwohl verbleibt, dass sich der optische Sensor, der Belichtungskörper und die Anstrahllichtquelle vorzugsweise zumindest in Querrichtung über die Breite des optischen Sensors vorzugsweise mit gleichbleibendem Querschnitt erstrecken, um diesen geometrischen Verhältnissen bestmöglich gerecht zu werden, während es an sich schon vorteilhaft ist, wenn sich der Belichtungskörper, die Anstrahllichtquelle und eventuell der optische Sensor sich in Querrichtung über die Breite des Prüfbereichs mit gleichbleibendem Querschnitt erstrecken.

Es versteht sich, dass der optische Sensor durch sehr unterschiedliche Kamerasysteme bereitgestellt werden kann. Insbesondere können hier Linearkameras oder Matrixkameras zur Anwendung kommen, wobei letztere ggf. für eine Wellenlängenaufsplittung in Maschinenrichtung genutzt werden kann. Dementsprechend wird in der Praxis der optische Sensor aus einer Vielzahl von zumindest in Querrichtung nebeneinander angeordneten Sensorelementen gebildet sein. Ebenso wird in der Praxis die Anstrahllichtquelle häufig eine Vielzahl von einzelnen Leuchtquellen, beispielsweise eine Vielzahl von Leuchtdioden umfassen, wenn sie nicht durch ein sich in Querrichtung erstreckende Leuchtröhre ausgebildet ist.

Es versteht sich, dass der optische Sensor senkrecht auf dem Prüfbereich ausgerichtet sein kann. Wie bereits vorstehend angedeutet, sind kleinere Winkelabweichungen jedoch ohne weiteres denkbar, ohne dass das Ergebnis der Inspektion diesbezüglich erheblich leidet.

Vorzugsweise handelt es sich bei dem überprüften Flachsachen um Drucksachen, wie beispielsweise Verpackungen und ähnliches. Hierbei versteht es sich, dass das Aufbringen der Glanzbereiche bzw. der Prägungen durchaus nicht mittels drucktechnischer Maßnahmen sondern ggf. auch auf anderer Weise, wie beispielsweise durch eine Beschichtung oder durch Aufsprühen vorgesehen sein kann. Darüber hinaus versteht es sich, dass die Überprüfung der Flachsachen nicht auf Drucksachen beschränkt ist, sondern insbesondere auch andere flächige Anordnungen, die durchaus eine gewisse Oberflächenstruktur aufweisen können, wie beispielsweise Kreditkarten oder Platinen, umfassen kann.

Es versteht sich, dass die Merkmale der vorstehend bzw. in den Ansprüchen beschriebenen Lösungen gegebenenfalls auch kombiniert werden können, um die Vorteile entsprechend kumuliert umsetzen zu können.

Weitere Vorteile, Ziele und Eigenschaften vorliegender Erfindung werden anhand nachfolgender Beschreibung von Ausführungsbeispielen erläutert, die insbesondere auch in anliegender Zeichnung dargestellt sind. In der Zeichnung zeigen:
- Figur 1: einen schematischen Schnitt entlang einer Maschinenrichtung durch eine erste Inspektionsvorrichtung;
- Figur 2: einen schematischen Schnitt entlang einer Maschinenrichtung durch eine zweite Inspektionsvorrichtung;
- Figur 3: eine schematische Aufsicht auf die Inspektionsvorrichtung nach Figur 2;
- Figur 4: schematisch die Anordnung von Direktlichtquellen der Inspektionsvorrichtung nach Figuren 2 und 3 in ähnlicher Darstellung wie Figur 3;
- Figur 5: einen schematischen Schnitt entlang einer Maschinenrichtung durch eine dritte Inspektionsvorrichtung;
- Figur 6: einen schematischen Schnitt entlang einer Maschinenrichtung durch eine vierte Inspektionsvorrichtung;
- Figur 7: einen schematischen Schnitt entlang einer Maschinenrichtung durch eine fünfte Inspektionsvorrichtung;
- Figur 8: einen schematischen Schnitt entlang einer Maschinenrichtung durch eine sechste Inspektionsvorrichtung; und
- Figur 9: einen schematischen Schnitt entlang einer Maschinenrichtung durch eine siebte Inspektionsvorrichtung.

Die in den Figuren dargestellten Inspektionsvorrichtungen 10 werden jeweils von Prüflinge 12 darstellenden Flachsachen 14 entlang einer Maschinenrichtung 18 durchlaufen und weisen einen Prüfbereich 16 auf, welcher sich im Wesentlichen entlang einer Querrichtung 19, die senkrecht zur Maschinenrichtung 18 definiert ist, erstreckt.

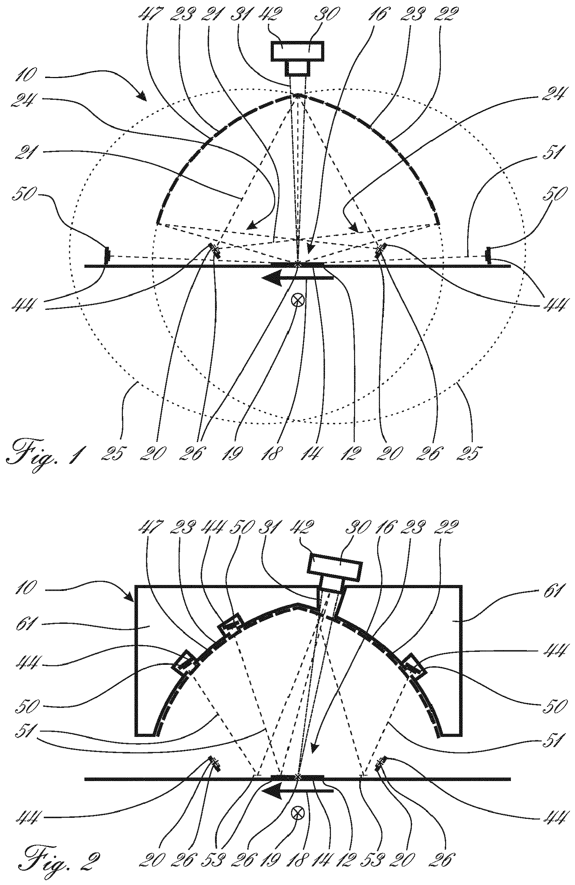

Es versteht sich, dass die in Figuren 1, 5 und 6 dargestellten Ausführungsbeispiele, die lediglich im Querschnitt dargestellt sind, auch rotationssymmetrisch bzw. im Wesentlichen rotationssymmetrisch ausgebildet sein können, wenn dieses erforderlich bzw. sinnvoll erscheint.

Die Inspektionsvorrichtungen weisen jeweils Anstrahllichtquellen 20 auf, welche mit ihrem Strahlengang 21 auf einen Belichtungskörper 22 strahlen, der wiederum den Prüfbereich 16 ausleuchtet.

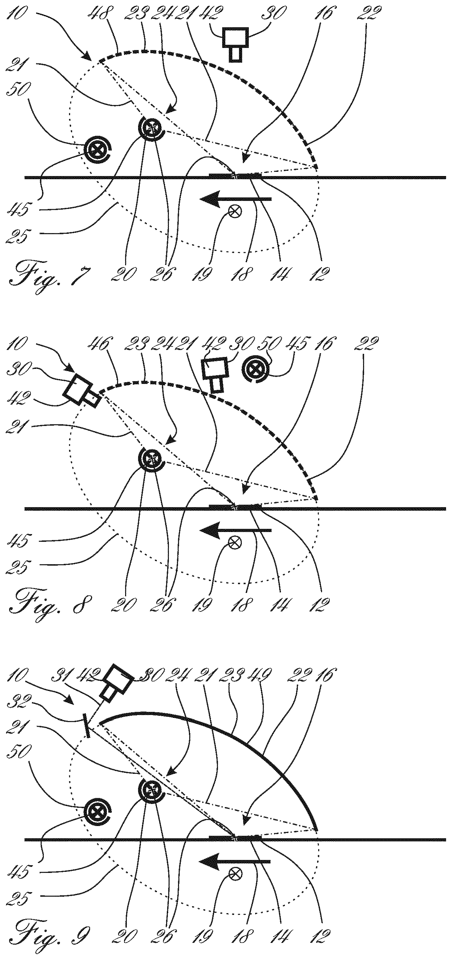

Hierbei weisen die in den Figuren 1 bis 6 dargestellten Inspektionsvorrichtungen jeweils zwei Bereiche 23 und die in den Figuren 7 bis 9 dargestellten Inspektionsvorrichtungen lediglich jeweils einen Bereich 23 auf, die sich jeweils mit einem elliptischen Querschnitt 25 (gepunktet angedeutet) erstrecken und naturgemäß jeweils zwei Fokusse 26 aufweisen.

Hierbei liegt jeweils einer der Fokusse 26 jedes Bereichs 23 in dem Prüfbereich 16, während in dem jeweils anderen Fokus 26 eine Anstrahllichtquelle 20 zu finden ist. Bei den Ausführungsbeispielen nach Figuren 1 bis 6 liegen die Fokusse 26 jeweils in einem Punkt bzw. auf einer Linie, welcher bzw. welche dann dementsprechend gleichförmig ausgeleuchtet ist.

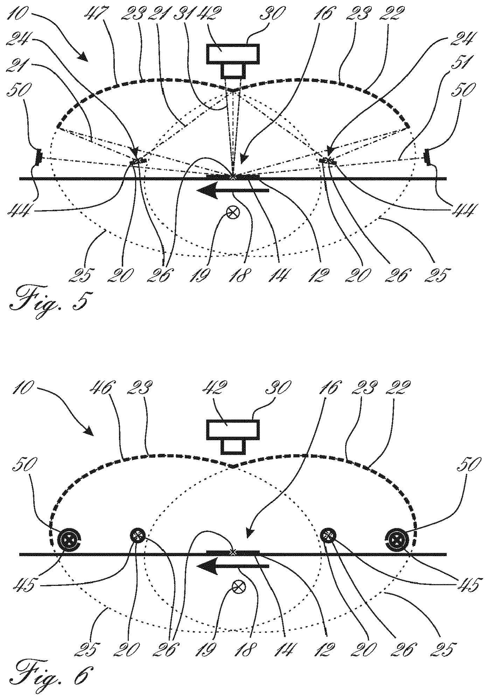

Bei den Ausführungsbeispielen der Figuren 1 bis 5 kommen jeweils LED-Leisten 44 als Anstrahllichtquellen 20 zur Anwendung, während bei den Ausführungsbeispielen nach Figuren 6 bis 9 diesbezüglich Leuchtröhren 45 zur Anwendung kommen.

Die Leuchtröhren 45 der Ausführungsbeispiele nach Figuren 7 bis 9 sind teilweise abgedeckt, sodass diese, genau wie die LED-Leisten 44 der Ausführungsbeispiele nach Figuren 1 bis 5 in einem Strahlwinkel 45, der auf den zugehörigen Bereich 23 mit elliptischem Querschnitt 25 gerichtet und beschränkt ist, jeweils auf die Belichtungskörper 22 strahlen. Bei dem Ausführungsbeispiel nach Figur 6 erscheint dieses im konkreten nicht notwendig, da hier auch direkt von der Anstrahllichtquelle kommendes Licht zur gleichmäßigen Ausleuchte des Prüfbereichs 16 genutzt wird, worauf ggf. jedoch auch verzichtet werden kann, wenn dieses zur Homogenität der Ausstrahlung beiträgt.

Wie unmittelbar ersichtlich, erstreckt sich der Belichtungskörper 22 bei allen Ausführungsbeispielen durchgängig über wenigstens 135° in der den Querschnitt darstellenden Zeichenebene, welche jeweils eine senkrecht auf der Oberfläche der zu prüfenden bzw. zu inspizierenden Flachsachen 14 und parallel zur Maschinenrichtung 18 bzw. senkrecht zur Querrichtung 19 ausgerichtete Schnittebene darstellt. Gleichwohl versteht es sich, dass in abweichenden Ausführungsbeispielen auch eine Erstreckung über geringere Winkel, insbesondere beispielsweise 120° oder sogar weniger, denkbar ist, wenn dieses für die vorliegende Inspektionsaufgabe ausreichend erscheint, was insbesondere dann gilt, wenn der Belichtungskörper 22 teildurchlässig ausgebildet ist, wie dieses bei den Inspektionsvorrichtungen 10 nach Figuren 1 bis 8 der Fall ist. Da bei diesen Ausgestaltungen ein optischer Sensor 30 durch den teildurchlässig ausgebildeten Belichtungskörper hindurch auf den Prüfbereich 16 gerichtet werden kann, wie dieses bei den Ausführungsbeispielen nach Figuren 1 bis 8 der Fall ist, ergibt sich unmittelbar eine sehr hohe Homogenität auch in dem am meisten interessierenden Bereich in unmittelbaren Blickfeld des optischen Sensors 30.

Hierbei wird das Blickfeld des optischen Sensors 30 im Wesentlichen durch einen optischen Strahlengang 31, wie er exemplarisch in Figuren 1, 2 und 5 dargestellt definiert und ist ebenfalls auf die in dem Prüfbereich 16 liegende Fokusse 26 gerichtet.

Bei den in Figuren 8 und 9 dargestellten Ausführungsbeispiel blickt der optische Sensor 30 nicht durch den Belichtungskörper 22 hindurch, wobei aus Platzgründen im Strahlengang 31 des optischen Sensors 40 der Inspektionsvorrichtung 10 nach Figur 9 ein Spiegel 32 angeordnet ist, aufgrund dessen der optische Sensor 30 an dem Belichtungskörper 22 vorbei auf dem Prüfbereich 16 gerichtet werden kann. Eine derartige Anordnung baut in Maschinenrichtung 18 entsprechend kürzer.

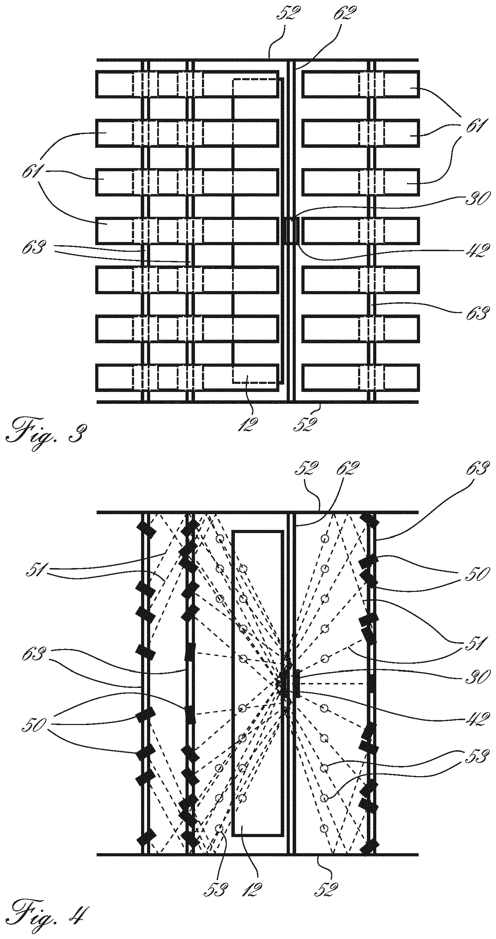

Bei sämtlichen Ausführungsbeispielen ist neben den Anstrahllichtquellen 20 und den zugehörigen optischen bzw. sonstigen Maßnahmen jeweils wenigstens eine Direktlichtquelle 15 vorgesehen, welche direkt oder über einen planen Seitenspiegel 52 auf den Prüfbereich 16 gerichtet ist. Ein derartiger Seitenspiegel 52 ist beispielhaft in Figuren 3 und 4 dargestellt. In abweichenden Ausführungsformen kann der Seitenspiegel 52 auch nicht plan ausgebildet sein, was jedoch ggf. zu äußerst komplexen optischen Abbildungen der Direktlichtquellen 15 führen kann, was dann jedoch möglicherweise bewusst gewollt bzw. in Kauf genommen wird.

Die Direktlichtquellen 50 strahlen einen verhältnismäßig definierten Strahlengang 51 in den Prüfbereich 16 und dienen dazu, Kanten, Kratzer oder Riefen bzw. sonstige dreidimensionale Strukturen zu erkennen, welche durch die allseitige Beleuchtung bzw. durch die Beleuchtung über einen sehr großen Winkelbereich auf Grund der Anstrahllichtquellen 20 und der zugehörigen Belichtungskörper 22 an sich nur sehr schwer zu identifizieren sind.

Hierzu bilden die Anstrahllichtquellen 20 einen ersten Messkanal und die Direktlichtquellen 50 einen zweiten Messkanal, wobei bei sämtlichen Ausführungsbeispielen die Lichtquellen 20, 50 beider Messkanäle sich durch ihre Wellenlänge unterscheiden. Auf diese Weise ist es möglich, beide Messungen gleichzeitig und ggf. auch mit demselben optischen Sensor 30, wie beispielhaft an Hand der Ausführungsbeispiele der Figuren 1 bis 7 und 9 dargestellt, durchzuführen. Es versteht sich, dass in abweichenden Ausführungsbeispielen, wie beispielsweise in Figur 8 beispielhaft dargestellt, auch ein separater optischer Sensor 30 diesbezüglich genutzt werden kann.

In abweichenden Ausführungsformen kann das Licht der Direktlichtquellen 50 und der Anstrahllichtquellen 20 auch auf andere Weise, beispielsweise auf Grund der Polarität oder der Taktung separierbar gewählt sein. Es versteht sich, dass in abweichenden Ausführungsformen auch getrennte Messungen vorgenommen bzw. auf eine Messung mittels der Direktlichtquellen 50 zur Gänze verzichtet werden kann.

Der zweite Messkanal wird bei den Ausführungsbeispielen nach Figuren 1, 5 bis 7 und 9 mittels der Direktlichtquellen 50, die ein Streiflicht aussenden umgesetzt, sodass die Direktlichtquelle 50 dieser Ausführungsbeispiele in den Fokus des optischen Sensors 30 gerichtet ist.

Anders ist dieses bei den Ausführungsbeispielen nach Figuren 2 bis 4 und 8, welche im Dunkelfeld Messungen durchführen, sodass die Direktlichtquellen in einem Auftreffbereich 53 (siehe beispielhaft Figuren 2 und 4) auf den Prüfbereich 16 gerichtet sind, der unmittelbar neben den optischen Sensor 30 reflektiert wird. Dieses bedingt, dass eine veränderte Reflektionsrichtung, wie sie durch Kanten, Kratzer oder Riefen bedingt ist, dann zur einer Reflektion in den optischen Sensor 30 führt, sodass ein entsprechendes Signal von dem optischen Sensor 30 erfasst bzw. ausgegeben werden kann.

Bei vorliegenden Inspektionsvorrichtungen 10 ist der optische Sensor 30 jeweils als Zeilenkamera 42 ausgebildet, wobei sich die Zeilenkamera 42 - je nach konkreter Wahl - lediglich über einen Teil der Breite der jeweiligen Inspektionsvorrichtung 10 in Querrichtung 19 erstreckt, wie exemplarisch in den Figuren 3 und 4 dargestellt. Hierbei sorgt eine an sich aus dem Stand der Technik bekannte Optik, dass der gesamte Prüfbereich 16 und insbesondere die sich in Querrichtung 19 erstreckende Breite der Inspektionsvorrichtung 10, durch welche die Prüflinge 12 bzw. Flachsachen 14 laufen, von der Zeilenkamera 42 erfasst wird. Je nach konkreter Wahl kann die Zeilenkamera auch eine größere Breite aufweisen. In alternativen Ausführungsformen kann statt der Zeilenkamera auch eine Matrixkamera zur Anwendung kommen, wobei - ggf. - die Sensorelemente der Matrixkamera, welche in Maschinenrichtung 18 hintereinander angeordnet sind, für eine spektrale Analyse oder für die Überprüfung bzw. Messung unterschiedlicher Messkanäle genutzt werden können.

Bei den Ausführungsbeispielen nach Figuren 1 bis 5 kommen sowohl als Anstrahllichtquellen 20 als auch als Direktlichtquellen 50 jeweils LED-Leisten 44 zur Anwendung, wobei die einzelnen LEDs der LED-Leisten 44 der Direktlichtquellen unterschiedlich ausgerichtet sind, wie dieses exemplarisch in Figur 4 dargestellt ist. Auf diese Weise können die Strahlengänge 51 der Direktlichtquellen 50 in geeigneter Weise individuell in Bezug auf den optischen Sensor 30 ausgerichtet werden.

Um eine geeignete Position zu gewährleisten, sind sowohl Zeilenkamera 42 als auch die Direktlichtquellen 50 an geeigneten Trägern 62, 63 angeordnet. Selbiges gilt auch für die Anstrahllichtquellen 20, wobei die zugehörigen Träger in den Figuren nicht explizit dargestellt sind, da es sich hier lediglich um herkömmliche LED-Leisten 44 handelt.

Bei den Ausführungsbeispielen nach Figuren 6 bis 9 kommen sowohl als Anstrahllichtquellen 20 als auch als Direktlichtquellen 50 Leuchtröhren 45 zur Anwendung, die ggf. abgeschirmt sind, um den Strahlengang 21, 51 in geeigneter Weise zu begrenzen. Je nach konkreter Umsetzung dieser Ausführungsbeispiele können hier auch noch weitere optische Einrichtungen, wie beispielsweise lineare Linsen oder ähnliches zur Anwendung kommen.

Es versteht sich, dass in abweichenden Ausführungsformen die Lichtquellen 20, 50 der Inspektionsvorrichtungen 10 nach Figuren 6 bis 9 ggf. auch durch LEDs umgesetzt werden können, wobei dieses auch für einzelne Lichtquellen gilt. Ebenso ist es denkbar, die LED-Leisten 44 der Ausführungsbeispiele nach Figuren 1 bis 5 durch Leuchtröhren darzustellen, wenn dieses für abweichende Ausführungsbeispiele ratsam oder sinnvoll erscheint.

Der Belichtungskörper 22 der Ausführungsbeispiele nach Figuren 1 bis 4 ist als Spiegelkörper 47 mit Löchern ausgebildet, wodurch ein teildurchlässiger Belichtungskörper 22 bereitgestellt ist. Die Dichte der Löcher dieser Spiegelkörper 47 sowie die Fokusse des optischen Sensors 30 und der Direktlichtquellen 50 sind hierbei derart gewählt, dass der Spiegelkörper 47 die entsprechenden Strahlengänge 31, 51 nur unwesentlich beeinträchtigt.

Wie anhand der Inspektionsvorrichtung 10 nach Figuren 2 bis 4 exemplarisch dargestellt, kann der Spiegelkörper 47 von Trägern 61 getragen werden, welche dem Spiegelkörper 47 bzw. Belichtungskörper 22 seine Form verleihen, indem diese Körper 22, 47 in die jeweiligen Träger 61 eingespannt sind, sodass der jeweilige Körper lediglich angenähert seine endgültige Form aufweisen muss, bevor er in die Träger 61 eingespannt wird. Die hierdurch bedingte Spannung und auch die Eigensteifigkeit bedingen dann, dass der Spiegelkörper 47 bzw. der Belichtungskörper 22 die durch die Träger 61 vorgegebenen Grundform auch in Bereichen nicht bezifferter Ausnehmungen für den optischen Sensor 30, die Direktlichtquellen 50 und sonstige Baugruppen, einnimmt. Es versteht sich, dass in abweichenden Ausführungsformen, insbesondere auch bei der Inspektionsvorrichtung 10 nach Figur 1, eigensteife Belichtungskörper 22 zur Anwendung kommen können.

Auch bei der Inspektionsvorrichtung 10 nach Figur 5 kommt ein Spiegelkörper 47 mit Löchern zur Anwendung, wobei dessen Grundform naturgemäß ein wenig von der Grundform der Spiegelkörper 47 bzw. Belichtungskörper 22 der Inspektionsvorrichtung 10 abweicht. Es versteht sich, dass auch hier ein selbsttragender Belichtungskörper 22 bzw. Spiegelkörper 47 oder aber ein von Trägern getragener Belichtungskörper 22 bzw. Spiegelkörper 47 zur Anwendung kommen kann.

Bei denen in Figuren 6 und 8 dargestellten Inspektionsvorrichtungen 10 kommt jeweils ein Streukörper 48 mit Löchern als Belichtungskörper 22 zur Anwendung. Ein derartiger Streukörper ist statt mit einer in Richtung des Prüfbereichs 16 verspiegelten Oberfläche mit einer opaken Streulicht möglichst gleichförmig diffus abstrahlenden Oberfläche versehen, wobei die Löcher dieses Streukörpers 48 ähnlich wie die Löcher der Spiegelkörper 47 dazu dienen, den jeweiligen Belichtungskörper 22 teildurchlässig auszubilden.

Es versteht sich, dass bei den Ausführungsbeispielen nach Figuren 6 und 8 statt der Streukörper 48 auch Spiegelkörper 47 bzw. bei den Ausführungsbeispielen nach Figuren 1 bis 5 statt der Spiegelkörper 47 auch Streukörper 48 zur Anwendung kommen können, falls dieses vorteilhaft erscheint. Je nach konkreter Umsetzung können die Streukörper 48 selbsttragend bzw. eigensteif ausgebildet werden, was in der Regel leichter fällt als bei Spiegelkörpern 47. Es versteht sich, dass auch die Streukörper 48 in bestimmten konkreten Umsetzungsformen über Träger ihre Form erhalten können.

Bei der Inspektionsvorrichtung 10 nach Figur 7 kommt statt der Spiegel- bzw. Streukörper 47, 48 ein halbdurchlässiger Spiegel 46 zur Anwendung, wobei es sich versteht, dass statt des halbdurchlässigen Spiegel 46 auch hier Spiegelkörper 47 bzw. Streukörper 48 jeweils mit Löcher genutzt werden können. Ebenso ist es denkbar, dass halbdurchlässige Spiegel 46 auch bei den Ausführungsbeispielen nach Figuren 1 bis 6 und 8 zur Anwendung kommen. Auch kann der halbdurchlässige Spiegel 46 vorzugsweise eigensteif ausgebildet sein. Ebenso ist es denkbar, dass dieser halbdurchlässige Spiegel 46 in abweichenden Ausführungsformen seine Form über separate bzw. externe Träger erhält.

Bei der Inspektionsvorrichtung 10 nach Figur 9 wurde auf einen teildurchlässig ausgebildeten Belichtungskörper 22 verzichtet und es kommt stattdessen ein Streukörper 49 als Belichtungskörper 22 zur Anwendung. Aufgrund der fehlenden Lichtdurchlässigkeit bzw. aufgrund der Undurchlässigkeit des Belichtungskörpers 22 der Inspektionsvorrichtung 10 nach Figur 9 blickt der optische Sensor 30 dieses Ausführungsbeispiels an dem Belichtungskörper 22 vorbei, wobei hierfür zur Minimierung der räumlichen Erstreckung in Maschinenrichtung 18 ein Spiegel 32 vorgesehen ist, über welchen der optische Sensor 30 in den Prüfbereich 16 blickt. Abweichend ist denkbar, dass der optische Sensor 30 unmittelbar in den Prüfbereich 16 blickt, wie dieses exemplarisch bei dem Ausführungsbeispiel nach Figur 8 vorgesehen ist, wobei bei dieser Inspektionsvorrichtung 10 die Direktlichtquelle 50 und ein zugehöriger optischer Sensor 30 durch den Belichtungskörper 22 der Inspektionsvornchtung 10 nach Figur 8 hindurch den Prüfbereich 16 anstrahlen bzw. erfassen, was bei diesem Ausführungsbeispiel durch eine Dunkelfeldmessung erfolgt, indem die Direktlichtquelle 50 der Inspektionsvorrichtung 10 nach Figur 8 auf einen Auftreffbereich (nicht in Figur 8 separat beziffert) gerichtet ist, von welchem das Licht der Direktlichtquelle 50 kurz vor oder kurz hinter dem zugehörigen optischen Sensor 30 in Maschinenrichtung 18 reflektiert wird.

Während mithin die Inspektionsvorrichtung 10 nach Figur 8 getrennte optische Sensoren 30 bzw. Zeilenkameras 42 zur Messung des von der Anstrahllichtquelle 20 einerseits und von der Direktlichtquelle 50 andererseits ausgesendeten Lichts nutzt, geschieht dieses bei den Ausführungsbeispielen nach Figuren 1 bis 7 und 9 jeweils durch denselben optischen Sensor 30 bzw. durch dieselbe Zeilenkamera 42.

Bei den Ausführungsbeispielen der Figuren 1 bis 8 variiert die Verteilung der Löcher, wobei in abweichenden Ausführungsformen statt der Löcher auch andere Öffnungen, wie Schlitze und Ähnliches, zur Anwendung kommen können, bzw. die Verspiegelung über die Erstreckung des Belichtungskörpers 22 in Maschinenrichtung 18, sodass das Licht der Anstrahllichtquellen 20 möglichst homogen auf den Prüfbereich 16 gelangt. Hierbei ist die Homogenität derart gewählt, dass die Lichtstärke über 135° unter 20%, vorzugsweise unter 15%, variiert.

Die Streukörper 48, 49 bedingen darüber hinaus, dass der Prüfbereich 16 mit multidirektionalem Licht ausgeleuchtet wird.

Wie unmittelbar nachvollziehbar, bauen die Inspektionsvorrichtungen 10 nach Figuren 1 und 5 wesentlich schmaler in Maschinenrichtung 18 als die Inspektionsvorrichtungen 10 nach Figuren 5 und 6, was daran liegt, dass die elliptischen Querschnitte 25 mit einem wesentlich größeren Überlapp gewählt und der jeweilige Fokus 26, in welchem die Anstrahllichtquelle 20 zu finden ist, näher an dem Bereich 23 des Belichtungskörpers 22 liegt, der von der jeweils anderen Anstrahllichtquelle 20 angestrahlt wird.

Bei dem Ausführungsbeispiel nach Figuren 1 und 5 befinden sich die Direktlichtquellen 50 außerhalb des durch die Belichtungskörper 22 umgebenen Raums, während dieses bei den Ausführungsbeispielen nach Figuren 2 und 6 nicht der Fall ist.

Insbesondere brauchen die Direktlichtquellen 50 der Inspektionsvorrichtungen 10 nach Figuren 1 und 5 bis 7 sowie 9 nicht durch die jeweiligen Belichtungskörper 22 strahlen, was bei den Ausführungsbeispielen nach Figuren 2 bis 4 und 8 der Fall ist. Bei geeigneter Wahl der Löcher bzw. der Transparenz des halbdurchlässigen Spiegels erweist sich dieses als einigermaßen unkritisch.

Wie unmittelbar an Hand der Figuren 3 und 4 ersichtlich, ist es insbesondere aufgrund der Seitenspiegel 52 möglich, sämtliche Direktlichtquellen auf einer Breite anzuordnen, welche die Breite des Prüfbereichs 16 um weniger als 10% überschreitet.

**Bezugszeichenliste:**

| | | | |
|---|---|---|---|
| 10 | Inspektionsvorrichtung | 42 | Zeilenkamera |
| 12 | Prüfling | 44 | LED-Leiste |
| 14 | Flachsache | 45 | Leuchtröhre |
| 16 | Prüfbereich | 46 | halbdurchlässiger Spiegel |
| 18 | Maschinenrichtung | 47 | Spiegelkörper mit Löchern |
| 19 | Querrichtung | 48 | Streukörper mit Löchern |
| | | 49 | Streukörper |
| 20 | Anstrahllichtquelle | | |
| 21 | Strahlengang der Anstrahllichtquelle 20 (exemplarisch beziffert) | 50 | Direktlichtquelle (exemplarisch beziffert) |
| 22 | Belichtungskörper | 51 | Strahlengang der Direktlichtquelle 50 (exemplarisch beziffert) |
| 23 | Bereich | | |
| 24 | Strahlwinkel | 52 | Seitenspiegel |
| 25 | elliptischer Querschnitt | 53 | Auftreffbereich (exemplarisch beziffert) |
| 26 | Fokus | | |
| | | | |
| 30 | optischer Sensor | 61 | Träger für Belichtungskörper 22 bzw. Spiegelkörper 47 (exemplarisch beziffert) |
| 31 | Strahlengang des optischen Sensors 30 (exemplarisch beziffert) | | |
| 32 | Spiegel | 62 | Träger für Zeilenkamera 42 |
| | | 63 | Träger für Direktlichtquelle 50 |

## Patentansprüche

1. Vorrichtung zur Inspektion des Oberflächenbildes einer einen Prüfling (12) darstellenden Flachsache (14), wobei die Inspektionsvorrichtung (10) einen von einer Anstrahllichtquelle (20) angestrahlten passiven Belichtungskörper (22), der einen Prüfbereich (16) ausleuchtet, sowie wenigstens einen auf den Prüfbereich (16) gerichteten optischen Sensor (30) umfasst, **dadurch gekennzeichnet, dass** der Belichtungskörper (22) teildurchlässig ausgebildet und der optische Sensor (30) in Bezug auf den Prüfbereich (16) optisch jenseits des Belichtungskörpers (22), den Prüfbereich (16) durch den Belichtungskörper (22) hindurch erfassend angeordnet ist und/oder **dass** die Anstrahllichtquelle (20) auf den Belichtungskörper (22) gerichtet ist und sich der Belichtungskörper (22) durchgängig über wenigstens 120° in einer senkrecht zur Oberfläche der zu prüfenden bzw. zu inspizierenden Flachsache (14) stehenden Schnittebene erstreckt.

2. Inspektionsvorrichtung (10) nach Anspruch 1, **dadurch gekennzeichnet, dass** der Belichtungskörper (22) ein halbdurchlässiger Spiegel (46) und/oder ein lichtdurchlässiger, insbesondere Löcher aufweisender, Streu- oder Spiegelkörper (47, 48) ist.

3. Inspektionsvorrichtung (10) nach Anspruch 2 **dadurch gekennzeichnet, dass** der Spiegelungsgrad bzw. die Lichtdurchlässigkeit, insbesondere die Dichte der Löcher, und/oder Rückstrahlung über die Erstreckung des Belichtungskörpers (22) variiert.

4. Inspektionsvorrichtung (10) nach einem der Ansprüche 1 bis 3, **dadurch gekennzeichnet, dass** die Anstrahllichtquelle (20) auf den Belichtungskörper (22) gerichtet und/oder in ihrem Strahlwinkel (24) auf die Erstreckung des Belichtungskörper (22) beschränkt ist.

5. Inspektionsvorrichtung (10) nach einem der Ansprüche 1 bis 4, **dadurch gekennzeichnet, dass** sich der Belichtungskörper (22) zumindest in einem Bereich (23) mit einem elliptischen Querschnitt (25) erstreckt und dass ein Fokus (26) des elliptischen Querschnitts (25) in dem Prüfbereich (16) und der andere Fokus (26) des elliptischen Querschnitts (25) in der Anstrahllichtquelle (20) liegen.

6. Inspektionsvorrichtung (10) nach Anspruch 5, **dadurch gekennzeichnet, dass** die Inspektionsvorrichtung (10) zumindest zwei Anstrahllichtquellen (20) aufweist und sich der Belichtungskörper (22) zumindest in zwei Bereichen (23) mit jeweils einem elliptischen Querschnitt (25) erstreckt und dass jeweils ein Fokus (26) jedes der beiden elliptischen Querschnitte (25) in dem Prüfbereich (16) und der jeweils andere Fokus (26) jedes der elliptischen Querschnitte (25) in einer der beiden Anstrahllichtquellen (20) liegen.

7. Vorrichtung zur Inspektion des Oberflächenbildes einer einen Prüfling (12) darstellenden Flachsache (14), wobei die Inspektionsvorrichtung (10) wenigstens eine auf einen Prüfbereich (16) gerichtete Direktlichtquelle (50) sowie wenigstens einen auf den Prüfbereich (16) gerichteten optischen Sensor (30) umfasst, **dadurch gekennzeichnet, dass** die wenigstens eine Direktlichtquelle (50) über einen parallel zu einer Maschinenrichtung (18), entlang welcher der Prüfling (12) die Inspektionsvorrichtung durchläuft, und senkrecht zur Oberfläche der zu prüfenden bzw. zu inspizierenden Flachsachen (14) ausgerichteten Seitenspiegel (52) auf den Prüfbereich (16) gerichtet ist.

8. Inspektionsvorrichtung (10) nach Anspruch 7, **dadurch gekennzeichnet, dass** die wenigstens eine Direktlichtquelle (50) derart auf den Prüfbereich (16) gerichtet ist, dass ihr Licht dicht neben den optischen Sensor (30) reflektiert wird.

9. Inspektionsvorrichtung (10) nach Anspruch 7 oder 8, **dadurch gekennzeichnet, dass** die wenigstens eine Direktlichtquelle (50) über dem Prüfbereich (16) bzw. in einer Breite, welche die Breite des Prüfbereichs (16) um 10 % oder weniger überschreitet, angeordnet ist und vorzugsweise sämtliche Direktlichtquellen (50) über dem Prüfbereich (16) bzw. in einer Breite, welche die Breite des Prüfbereichs (16) um 10 % oder weniger überschreitet, angeordnet sind.

10. Inspektionsvorrichtung (10) nach einem der Ansprüche 7 bis 9, **dadurch gekennzeichnet, dass** der Seitenspiegel (52) plan ist.

11. Inspektionsvorrichtung (10) nach einem der Ansprüche 1 bis 6 und nach einem der Ansprüche 7 bis 10, **dadurch gekennzeichnet, dass** die Direktlichtquelle (50) und die Anstrahllichtquelle (20), beispielsweise aufgrund ihrer Polarität, ihrer Wellenlänge oder ihrer Taktung, separierbares Licht aussenden und/oder dass das Licht sowohl der Direktlichtquelle (50) als auch der Anstrahllichtquelle (20) über einen gemeinsamen optischen Sensor (30) oder das Licht der Direktlichtquelle (50) und das Licht der Anstrahllichtquelle (20) über wenigstens zwei voneinander verschiedene optische Sensoren (30) erfasst werden.

12. Verfahren zur Inspektion des Oberflächenbildes einer einen Prüfling (12) darstellenden Flachsache (14), wobei ein Prüfbereich (16) über einen von einer Anstrahllichtquelle (20) angestrahlten passiven Belichtungskörper (22) indirekt ausgeleuchtet und von dem Prüfbereich (16) ausgehendes Licht über wenigstens einen optischen Sensor (30) erfasst wird, **dadurch gekennzeichnet, dass** der optische Sensor (30) durch den Belichtungskörper (22) hindurch den Prüfbereich (16) erfasst und/oder **dass** der Prüfbereich (16) über zumindest 120° in einer senkrecht zur Oberfläche der zu prüfenden bzw. zu inspizierenden Flachsachen (14) stehenden Schnittebene durchgängig ausgeleuchtet wird.

13. Inspektionsverfahren nach Anspruch 12, **dadurch gekennzeichnet, dass**, wenn ein Helligkeitswert innerhalb eines definierten Helligkeitswertebereichs von dem optischen Sensor (30) erfasst wird, auf einen Glanzbereich in dem Prüfbereich (16) bzw. in dem im Prüfbereich (16) befindlichen Oberflächenbild des Prüflings (12) geschlossen wird.

14. Inspektionsverfahren nach Anspruch 12 oder 13, **dadurch gekennzeichnet, dass** der Prüfbereich (16) mit multidirektionalem Licht, vorzugsweise mit einer über 120°, insbesondere über 135°, unter 20 %, insbesondere unter 15 %, variierenden Lichtstärke, ausgeleuchtet wird.

15. Inspektionsverfahren nach einem der Ansprüche 12 bis 14, **dadurch gekennzeichnet, dass** zum Einen mittels der Anstrahllichtquelle (20) ein erster Messkanal gebildet wird sowie zum Anderen über einen zweiten Messkanal, vorzugsweise mittels einer Direktlichtquelle (50), im Hell- oder Dunkelfeld eine Kanten- bzw. Kratzerdetektion erfolgt und/oder ein Helligkeitsverhältnis zwischen dem ersten Messkanal und dem zweiten Messkanal ermittelt und, wenn das Helligkeitsverhältnis innerhalb eines definierten Helligkeitsverhältnisbereichs liegt, auf einen Glanzbereich in dem Prüfbereich (16) bzw. in dem im Prüfbereich (16) befindlichen Oberflächenbild des Prüflings (12) geschlossen wird.

16. Inspektionsvorrichtung (10) bzw. Inspektionsverfahren nach einem der vorstehenden Ansprüche, **dadurch gekennzeichnet, dass** die Schnittebene den optischen Sensor (30) und dessen Strahlengang (31) aufweist und/oder parallel zu der Maschinenrichtung (18) bzw. senkrecht zu einer Querrichtung (19) ausgerichtet ist.

17. Inspektionsvorrichtung (10) bzw. Inspektionsverfahren nach einem der vorstehenden Ansprüche, **dadurch gekennzeichnet, dass** der Belichtungskörper (22) und/oder die Anstrahllichtquelle (20) sich in einer Querrichtung (19) mit gleichbleibendem Querschnitt erstrecken.

18. Inspektionsvorrichtung (10) bzw. Inspektionsverfahren nach einem der vorstehenden Ansprüche, **dadurch gekennzeichnet, dass** die Flachsache (14) eine Drucksache ist.
